Europäisches Patentamt

(19) European Patent Office

Office européen des brevets

(11) Publication number: **0 078 802**
**B1**

(12) **EUROPEAN PATENT SPECIFICATION**

(45) Date of publication of patent specification: **31.07.85**　　(51) Int. Cl.⁴: **B 60 R 5/04**

(21) Application number: **82900024.9**

(22) Date of filing: **16.12.81**

(86) International application number:
**PCT/EP81/00197**

(87) International publication number:
**WO 82/02175 08.07.82 Gazette 82/17**

(54) **LOAD CARRIER FOR VEHICLES.**

(30) Priority: **23.12.80 SE 8009097**

(43) Date of publication of application:
**18.05.83 Bulletin 83/20**

(45) Publication of the grant of the patent:
**31.07.85 Bulletin 85/31**

(84) Designated Contracting States:
**AT BE CH DE FR GB LI LU NL SE**

(56) References cited:
**AU-A- 437 448**
**AU-A- 455 613**
**DE-A-2 302 972**
**FR-A-1 251 232**
**FR-A-2 438 564**
**US-A-2 094 401**
**US-A-2 470 314**

(73) Proprietor: **Elajo Invest AB**
**Box 1**
**S-572 01 Oskarshamn (SE)**

(72) Inventor: **Johansson, Bo Christer**
**Karlvägen 13**
**S-352 44 Växjö (SE)**

(74) Representative: **Asketorp, Göran P. et al**
**Lars Holmqvist Patentbyra AB Box 4289**
**S-203 14 Malmö 4 (SE)**

Courier Press, Leamington Spa, England.

# Description

## Technical field

The present invention refers to the field of goods handling and more specially to a loader or load carrier for light vehicles and/or passenger cars having a cargo space or loading area, such as station wagons or the like. Transporting smaller goods in a conventional station wagon often implies loading and unloading problems.

At present it is necessary for a person loading the vehicle to carry out time-demanding, heavy and sideways lift working in the interior of the vehicle in a stooped or cramped position.

When delivering goods of smaller size the separate goods articles must often be loaded and unloaded several times in order to reach the article intended to be delivered at a certain place.

When transporting heavier goods this will often be placed at the very back of the vehicle due to difficulties in moving the articles further into the loading area. This means an incorrect distribution of weight on the vehicle shafts with respect to traffic safety. Moreover, every time other goods articles places inside said heavier goods in the loading area, are to be taken out, the heavy goods have to be moved which implies great and unnecessary strain to the persons loading.

Furthermore, the floor of the vehicle is subjected to unnecessary wear due to this irrational handling of goods.

Load carriers for stations wagons or the like are previously known from DE Offenlegungsschrift No. 2,302,972, US Patent Specification No. 2,094,401, FR Patent Specifications Nos. 1,251,232 and 2,438,564.

DE Offenlegungsschrift No. 2,302,972 refers to a load carrier comprising a load platform which is slidable in a frame fixedly secured in the vehicle. The platform is pushable beyond the front edge of the frame to the back of the front seats when the back seats are folded. However, when pulled out of the loading area the platform must be supported, which partly eliminates the object of full access from three sides. Moreover, as stated above, the frame is fixedly secured in the vehicle, therewith preventing the normal use of the car. There is no possibility of locking the platform in different desired positions in relation to the frame.

The French specifications Nos. 1,251,232 and 2,438,564 each refers to a load carrier comprising a frame and a load platform. The frame in both of the specifications is fixedly secured in the vehicle, which again makes it impossible to use the car in a normal way when once the load carrier is mounted in the vehicle. None of these two carriers are possible to push beyond the front edge of the frame and furthermore none of them are possible to lock in different desired positions. They may be pushed into place in the vehicle and pulled all the way out of the vehicle only. Moreover, the load carrier in accordance with the French specification No. 1,251,232 has to be supported by legs when pulled out of the vehicle.

US patent specification No. 2,094,401 refers to a load carrier of a slightly different type. This load carrier comprises again a frame and a load platform, which however is not intended to be pulled out of the car. The frame is fixedly secured in the vehicle and the platform may only be pushed along the length of the frame.

Thus, there is a demand for an improved device for simplifying loading and unloading of goods, preferably when using station wagons or the like, in order to eliminate the risk of injuries to the body and the risk to wear out in the first hand, back and legs. Furthermore, it would be desirable to have a better distribution of weight in the vehicle when loading and to eliminate unnecessary wear as well as rationalize the handling of lighter goods.

The object of the invention is to provide an improved load carrier to be securely but releasably mounted in a vehicle, which load carrier comprises a slidable load platform the whole of which or part of which may be moved to a position outside the boundary of the vehicle and back into the loading area of the vehicle where it may be fixed in a predetermined position.

A further object of the invention is to provide an improved load carrier comprising a frame and a platform where the frame and the platform together are easily releasable from the vehicle so that the normal use of the vehicle is restored. As a result it is also possible to have only one load carrier for different vehicles.

## Disclosure of the invention

In accordance with the present invention there is provided a load carrier as defined in claim 1.

## Brief description of the drawings

Other objects of the invention as well as the novel features of the construction thereof will become apparent from the following description of a preferred embodiment when read in connection with the accompanying drawings in which

Fig. 1a to c are schematic side views and plan views of the load carrier according to the invention placed in three different positions.

Fig. 2 is a plan view of the frame of the load carrier.

Fig. 3 is a plan view from below of the load platform.

Fig. 4 is a cross-sectional view of the frame.

Fig. 5 is a side view of the means of the attachment of the load carrier.

Fig. 6 is a side view of an engagement member to be engaged with the means of attachment of Fig. 5.

Fig. 7 is a cross sectional view of a locking device to lock the load platform in respect of the frame, and

Fig. 8 is a plan view from below of a supplementary load platform.

## Best mode of carrying out the invention

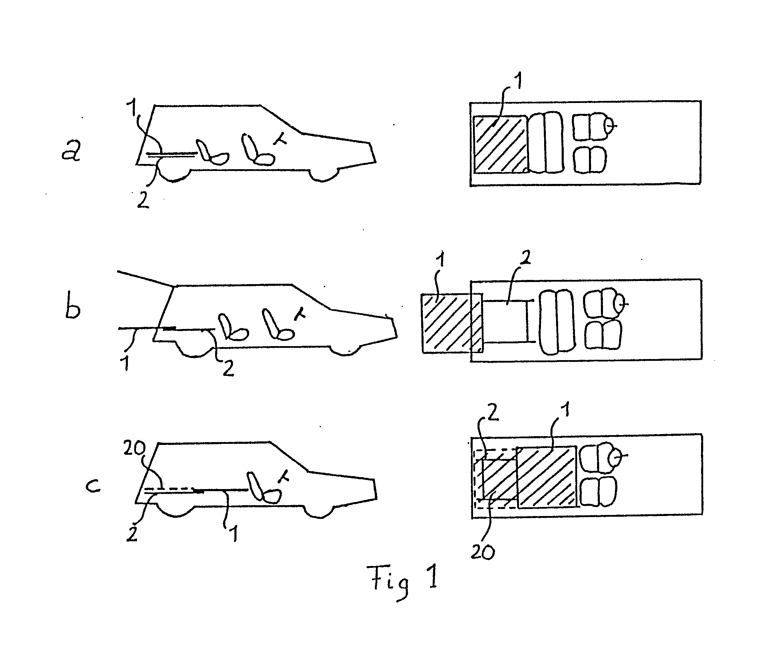

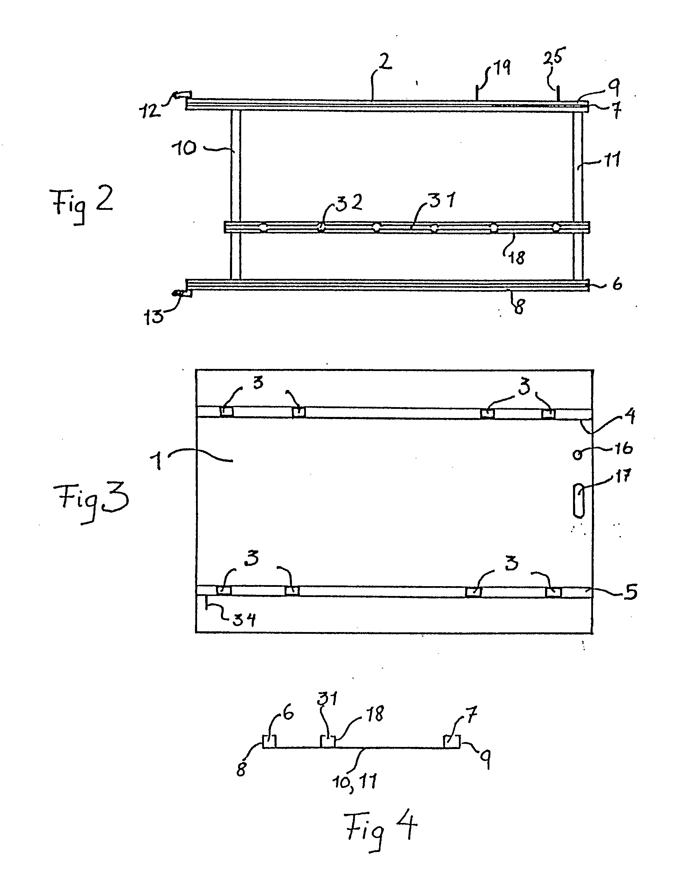

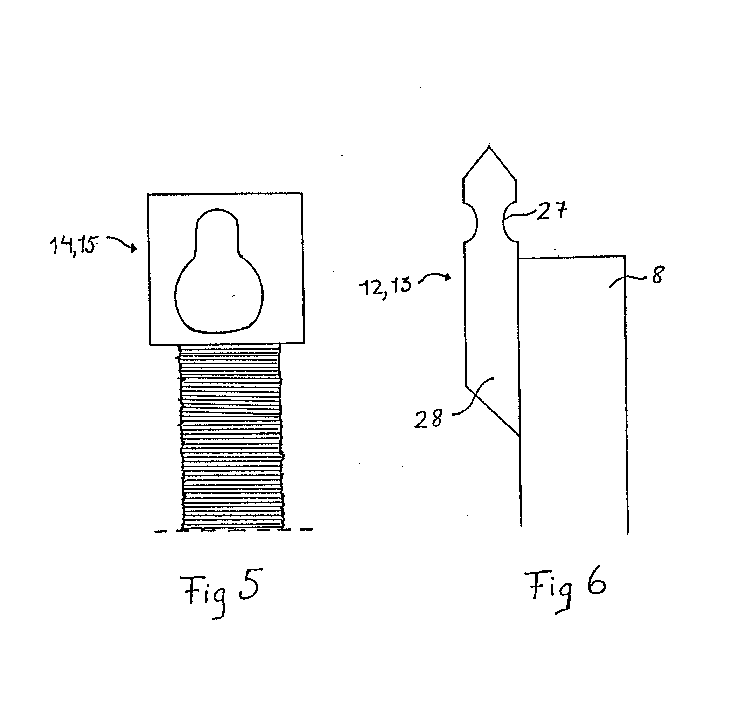

As shown in Figs. 1 to 4 the load carrier comprises a load platform 1 and a frame 2. As shown in Fig. 3 the load platform is provided with rollers or sliding members 3 mounted on angle irons 4, 5 and slidable in tracks 6, 7 in side beams 8, 9 of the frame 2. The load platform 1 furthermore comprises a handle 17 as well as a locking device 16, which will be described in detail below. Moreover, the side beams 8, 9 of the frame comprises transverse beams 10, 11 connecting the two side beams. At one end of the beams 8, 9 there are provided engagement members 12, 13 to engage with means of attachment 14, 15 (see Fig. 5), which are firmly fixed in the loading area of the vehicle. A locking beam 18 extending between the transverse beams 10, 11 is provided with a longitudinal groove 31 (Fig. 2). A number of cut-out portions 32 are evenly spaced along the length of the groove in order to lock the load platform in a desired position with reference to the frame. The load platform 1 is slidably mounted with respect of the frame 2 by means of the sliding members 3 and may be extracted to the position shown in Fig. 1b and inserted to the position shown in Fig. 1a. With the back seat folded, the load platform 1 may be inserted to the position shown in Fig. 1c, whereafter a supplemental load platform 20 (Fig. 8) may be inserted in the frame 2, behind the main load platform 1.

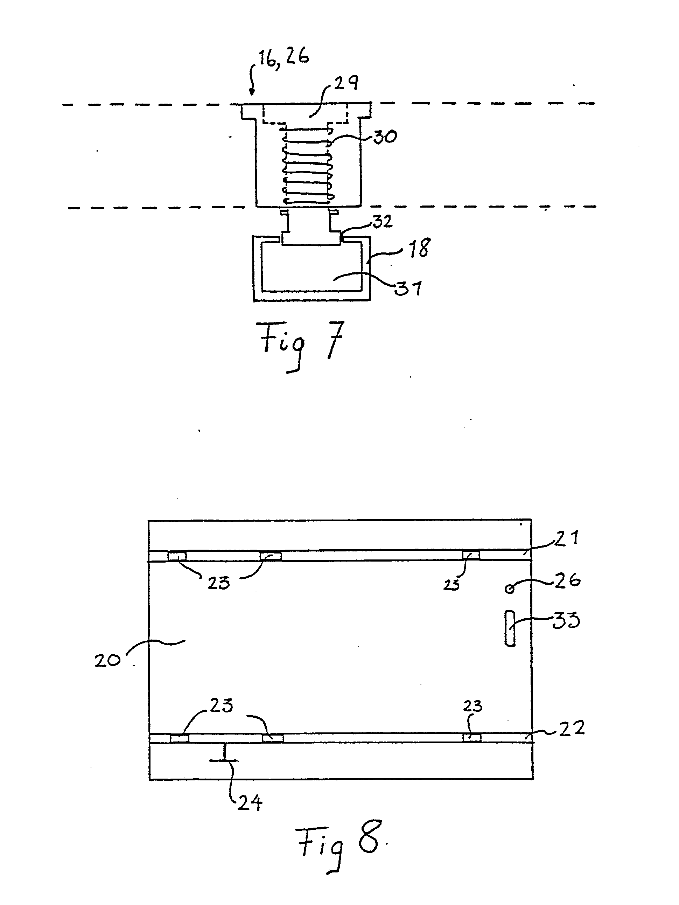

The engagement members 12, 13 at the one end of each beam 8, 9 are shown in detail in Fig. 6 and comprise a rod or pin 28 provided with a recess 27. The recess is dimensioned to fit in a keyhole-shaped opening in the means of attachment 14, 15 shown in Fig. 5. The load carrier is mounted in the vehicle by inserting the engagement members 12, 13 in the large portion of the keyhole-shaped opening in the means of attachment 14, 15 raising the frame at the back end. When the frame is lowered to a horizontal position the means of attachment are locked in the narrow part of the keyhole-shaped openings, fixing the frame in the loading area of the vehicle. The load platform 1 comprises a locking device 16 shown in details in Fig. 7. The locking device comprises a push button 29, which is biased upwardly by means of a spring 30 and which lower portion interacts with the locking beam 18 of the frame 2. When the push button is depressed, the lower portion of the button is free to run in the groove 31 and the load platform is free to move along the frame 2. When the press button is locked in one of the cut-in portions the load platform is locked in relation to the frame.

At loading, the load platform is retracted to its rear position and is stopped at a maximal retracted position by a stop lug 19 (Fig. 2) cooperating with a stop pin 34 (Fig. 3). After having loaded the load platform it is inserted into the vehicle and is stopped at a neutral position, i.e. the position shown in Fig. 1a. If the back seat of the vehicle is folded the load platform may be further inserted into the loading area. This is achieved by loosening the locking device 16 through pressing down the press button 29, whereafter the load platform may be pushed forward. The load platform may be pushed all the way to the back of the front seats and be locked in the locking beam 18 in any position between neutral position and this outmost position. When the load platform is pushed from neutral position beyond the frame (Fig. 1c) the sliding elements run freely on the folded back seats and due to the shape of the tracks 6 and 7 and the sliding members 3, the load platform is in this position prevented from being displaced sideways. When the load platform 1 is pushed forward to the back of the front seat (Fig. 1c), a supplementary load platform may be used, which is shown in Fig. 8, to supplement the main load platform 1 and fill the total load area up. The function of the supplementary load platform is analogue to that of the main load platform 1 with the angle irons 21, 22, which have been provided with sliding elements 23, being inserted in the tracks 6, 7. The supplementary load platform is pushed forward until a stop pin 24 mounted thereon has passed a stop lug 25 on the frame 2, whereafter the supplementary load platform is firmly positioned in the vehicle and the loading of the goods may start. When all the goods have been loaded the supplementary load platform is inserted until the stop pin 24 has passed the stop lug 19 thus locking the supplementary platform in position. The supplementary platform comprises like the main platform a locking device 26 and a handle 33.

When the load platform is to be taken out of the vehicle the locking device 26 is disengaged, when using the supplementary load platform 20, whereafter the platform 20 is withdrawn and taken out of the vehicle. After grasping the handle 17 of the main platform the locking device 16 is released and the main platform 1 pulled to the neutral position where it is locked in the frame. Thereafter, the frame is released from the means of attachment 14, 15 by raising the corresponding end of the load platform to move the engagement members 12, 13 into the greater part of the keyhole-shaped openings, whereafter finally the load carrier is taken out of the vehicle as a whole. Alternatively the load platform may be taken away and the frame left in the vehicle.

With the load carrier in accordance with the present invention it is easy to load and unload a station wagon or the like without putting too much strain on back and legs. By pulling out the load platform it is also possible to take out goods placed behind the goods that are latest stowed without moving the latter articles. Even articles placed right behind the front seat may be conveniently taken out beyond the boundaries of the vehicle. Moreover, heavy goods may be pushed further into the loading area and fixed in a desired position with the locking device in order to obtain the optimal distribution of the weight in the vehicle.

A further advantage with the construction of the locking beam and the spring loaded locking device is that when putting on the brakes or accelerating the press button is automatically locked in one of the extensions, thereby locking the load platform in a position if the load platform by mistake was not properly locked in the frame. This prevents that the loaded platform is pressed against the seats in the case of a hard application of the brakes or that the loaded platform is pressed backwards in the case of a heavy acceleration. Furthermore, the wear on the loading area of the vehicle is reduced and the irrational handling of goods of today may be avoided which means more effective working hours. The loaded carrier does not effect the passenger transport capacity and the effects on the loading area itself are very small. The only permanent incision in the vehicle is the attachment of the bolts or the rods 14 and 15. The load carrier may be lifted in and out of the vehicle very easily and may be used in different vehicles. Different accessories as tool boxes, dog nets, goods harnesses etc. may be mounted directly on the load carrier without making further incision in the vehicle.

It should be noted that at least four sliding members 3 (or 23) are in engagement with the tracks 8, 9. This means that the load platform can be loaded in its position as seen in Fig. 1b with a heavy load at the cantilevered end. As a matter of fact the load platform can withstand 100 kg at the outmost end in this position. The whole load carrier is very light and has a weight of only 22 kg without the extra platform, which makes it easy to insert and take out.

While one particular and preferred embodiment of the invention has been shown in the drawings and described above, it will be apparent that the assembly is capable of many changes in form, construction and arrangement without departing from scope of the invention as defined by the following claims.

**Claims**

1. Load carrier to be mounted in the loading area of a station wagon, in which the loading area consists of an ordinary loading area behind the back seat or a total loading area when the back seat is folded, comprising a frame (2) including at least one rail (6, 7) and a load platform (1) slidably supported by said rail or rails, the load platform (1) when using the total loading area being pushable beyond the front edge of the frame (2) all the way to the back of the front seats, and the whole of said load platform may be pulled out of the loading area when loading or unloading, characterized in that the frame (2) includes a locking beam (18) and is adapted to be releasably secured in the ordinary loading area; that the load platform (1) is releasable from the frame and includes a locking device (16, 26) adapted to lock the load platform (1, 20) in relation to the frame (2) through engagement with the locking beam (18); that at one end of the or each rail (6, 7) is arranged an engagement member (12, 13), having a portion of reduced width (27) to engage with complementary means of attachment (14, 15) anchored in the loading area of the vehicle the or each means of attachment having at its upper end a keyhole-shaped opening with a relatively narrow upper portion and a relatively wide lower portion to cooperate with the or the respective engagement member so that the engagement member may be inserted into the relatively wide portion of the keyhole-shaped opening of the means of attachment when the other end of the frame is raised, the portion of reduced width of the engagement member (12, 13) being located in the relatively narrow upper portion of the opening of the means of attachment (14, 15) when the frame lays against the loading area in its rest position.

2. Load carrier in accordance with claim 1, characterized in that the engagement members (12, 13) are rods.

3. Load carrier in accordance with claim 1, characterized in that the means of attachment (14, 15) are bolts.

4. Load carrier in accordance with any of the previous claims, characterized in that the locking beam (18) is provided with a longitudinal groove (31) comprising cut-out portions (32) evenly spaced along the beam to engage with the locking device (16, 26).

**Patentansprüche**

1. Ladegutträger für die Anordnung auf der Ladefläche eines Kombifahrzeuges, bei dem die Ladefläche aus einer üblichen Ladefläche hinter dem Rücksitz besteht oder einer erweiterten Ladefläche bei umgeklappten Rücksitzen, mit einem Führungsrahmen (2), der mindestens eine Führungsschiene (6, 7) aufweist und einer Ladeplatte (1), die verschiebbar getragen ist auf der oder den Schienen und über den vorderen Rand des Führungsrahmens bei Ausnutzung der erweiterten Ladefläche zu schieben ist bis an die Rückseite der Vordersitze und die beim Ein- oder Ausladen aus der Ladefläche herauszuziehen ist, dadurch gekennzeichnet, daß der Führungsrahmen (2) eine Verriegelungsschiene (18) aufweist und lösbar verbunden ist mit der Ladefläche des Fahrzeuges; daß die Ladeplatte (1) mit dem Führungsrahmen (2) lösbar verbunden ist und einen Verriegelungsmechanismus (16, 26) aufweist, mit dem die Ladeplatte (1, 20) in Bezug auf den Führungsrahmen (2) an der Verriegelungsschiene (18) zu verriegeln ist; daß an einem Ende der Führungsschiene oder jeder Führungsschiene (6, 7) ein Kupplungsglied (12, 13) angeordnet ist, das einen Abschnitt (27) von verminderter Breite aufweist für eine Verbindung mit einer zugehörigen Kupplung (14, 15), die auf der Ladefläche des Fahrzeuges verankert ist, wobei diese Kupplung (14, 15) an ihrem oberen Endabschnitt eine schlüssellochförmige Öffnung mit einem verhältnismäßig schmalen oberen Abschnitt und einem verhältnismäßig breiten unteren Abschnitt für die Aufnahme des zugehörigen Kupplungsteiles aufweist, so daß das Kupplungsglied in den verhältnismäßig breiten Abschnitt der schlüssellochförmigen Öffnung der Kupplung einzustecken ist, wenn das andere Ende des Führungsrahmens (2) angehoben ist und der Abschnitt des Kupplungsteiles von verminderter Breite in den verhältnismäßig schmalen oberen Abschnitt der Öffnung der Kupplung (14, 15) eingreift, wenn der Führungsrahmen in seiner Ruhestellung auf der Ladefläche aufliegt.

2. Ladegutträger nach Anspruch 1, dadurch gekennzeichnet, daß die Kupplungsglieder (12, 13) stabförmig ausgebildet sind.

3. Ladegutträger nach Anspruch 1, dadurch gekennzeichnet, daß die Kupplungen (14, 15) als Zapfen ausgebildet sind.

4. Ladegutträger nach einem der vorhergehenden Ansprüche, dadurch gekennzeichnet, daß die Verriegelungsschiene (18) mit einer längsverlaufenden Führungsnut (31) versehen ist, die Öffnungen (32) aufweist, die in bestimmten Abständen entlang der Verriegelungsschiene für die Aufnahme der Verriegelungsmechanismen (16, 26) angeordnet sind.

**Revendications**

1. Porteur de charges à monter dans la zone de chargement d'un break, dans lequel la zone de chargement est la zone de chargement ordinaire disposée derrière le siège arrière ou la zone totale de chargement lorsque le siège arrière est rabattu, ledit porteur de charge comprenant un bâti (2) comportant au moins un rail (6, 7) et une plateforme de charge (1) supportée de façon coulissante par ledit rail ou rails, la plateforme de charge (1) lorsqu'elle utilise la zone totale de chargement pouvant être poussée au-delà du bord avant du bâti (2) tout le long jusqu'à l'arrière des sièges avant, et la totalité de ladite plateforme de charge pouvant être tirée hors de la zone de chargement lors du chargement ou du déchargement, caractérisé en ce que le bâti (2) comprend une poutre de verrouillage (18) et est agencé de manière à être fixé de façon amovible dans la zone ordinaire de chargement; en ce que la plateforme de charge (1) peut être séparée du bâti et comprend un dispositif de verrouillage (16, 26) pouvant verrouiller la plateforme de charge (1, 20) par rapport au bâti (2) par engagement avec la poutre de verrouillage (18); en ce que, à l'une des extrémités du rail ou des rails (6, 7) est disposé un organe d'engagement (12, 13) ayant une portion de largeur réduite (27) pouvant s'engager avec des moyens de fixation complémentaires (14, 15) ancrés dans la zone de chargement du véhicule, le ou les moyens de fixation présentant à son extrémité supérieure une ouverture en forme de trou de serrure avec une portion supérieure relativement étroite et une portion inférieure relativement large destinées à coopérer avec le ou les organes d'engagement respectifs, de façon que l'organe d'engagement puisse être introduit dans la portion relativement large de l'ouverture en forme de trou de serrure des moyens de fixation lorsque l'autre extrémité du bâti est soulevée, la portion de largeur réduite de l'organe d'engagement (12, 13) étant positionnée dans la portion supérieure relativement étroite de l'ouverture des moyens de fixation (14, 15) lorsque le bâti repose contre la zone de chargement dans sa position de repos.

2. Porteur de charges suivant la revendication 1, caractérisé en ce que les organes d'engagement (12, 13) sont constitués par des tiges.

3. Porteur de charges suivant la revendication 1, caractérisé en ce que les moyens de fixation (14, 15) sont constitués par des boulons.

4. Porteur de charges suivant l'une quelconque des revendications précédentes, caractérisé en ce que la poutre de verrouillage (18) présente une rainure longitudinale (31) comprenant des portions découpées (32) réparties régulièrement sur la longueur de la poutre pour venir en engagement avec le dispositif de verrouillage (16, 26).

Fig 1

Fig 2

Fig 3

Fig 4

14,15 →

Fig 5

12,13 →

27

8

28

Fig 6

Fig 7

Fig 8.